# EUROPEAN PATENT APPLICATION

(11) **EP 1 235 003 A1**
(43) Date of publication of application: **28.08.2002**
(21) Application number: 01830131.7
(22) Date of filing: 23.02.2001
(51) Int. Cl.: F16H 55/30

(54) **Sprocket for a roller chain or bushing chain, with teeth having a different flank profile on the same sprocket**

(71) Applicant: Morse Tec Europe S.p.A., 20121 Milano (IT)
(72) Inventor: Baddaria, Giuseppe, 23877 Paderno D'Adda (LC) (IT)
(74) Representative: Petruzziello, Aldo

(57) **Abstract**

A chain sprocket (10) has the flank shapes of successive teeth (12) along the circumference differing from one another. The flank profiles vary according to a precise or randomly determined rule (randomisation). It allows the noise level of the chain to be reduced without affecting the load on said chain.

## Description

The present invention refers to sprockets for roller chains or bushing chains for drive transmission.

Said chains are widely used in the automotive field, for example to transmit drive from a drive shaft to a camshaft.

Prior art sprocket-chain assemblies can sometimes have problems of excessive noise.

Generation of noise in such a system is substantially due to the sprocket-and-chain meshing and is therefore characterized by one or more "meshing frequencies" or "pitch frequencies", equal to the revs per minute of the engine times the number of teeth in each sprocket, or multiples thereof.

Pure tones derive therefrom which, for some rotational speeds of the engine, excite structural frequencies, giving rise to the above-mentioned noise problems.

Previous disclosure EP 0 907 041 A1 proposes a solution to the problem whereby, in a sprocket for roller chain, the root radiuses or diameters of at least some teeth of the sprocket are different from each other within a certain range and teeth with different root diameters follow each other on the sprocket in a random or "randomised" manner, that is to say according to a pattern established with the aid of software based upon principles of harmonic signal analysis.

Consequently the radial seating position of the chain rollers on the sprocket varies.

Although said roller-chain-and-sprocket drive has achieved good results, it nevertheless has the drawback of creating an excessive tensive stress in the chain when the chain encounters successive root diameters greater than the theoretical one.

Early failure of the chain can thus occur. Otherwise, it can be necessary to resort to stronger chains with a consequent increase in costs.

Another prior art document (US 3377875) teaches a drive assembly, with sprockets and chain, in which the chain is a toothed chain or "silent chain" and the sprocket, in order to reduce the noise level, has some teeth having a portion of a flank or flanks removed or sheared off. The full profile teeth and the teeth with a portion sheared off follow one another in a set sequence on the sprocket. The portion removed or shared off, as can be seen from Figure 6 of said disclosure, is of a uniform thickness along the whole tooth flank from the root diameter circle to the addendum circle, and said disclosure gives no other teaching as to how said sheared off portion must be to optimise the result, nor does it provide for the application to a roller chain.

A further prior art document, WO 97/11292, proposes, in order to reduce the noise level, a sprocket with teeth of a reduced thickness; the reduction in thickness is achieved on a central part of each flank of each tooth and is calculated so a to compensate for the actual pitch of the chain, so that the chain and the sprocket remain in contact. The declared object is to avoid the noise consequent upon wear of the teeth.

An object of the present invention is to reduce the noise due to meshing of a roller or bushing chain drive, nevertheless reducing or eliminating the drawbacks relating to the prior art.

The present invention is defined in appended claim 1. Further advantageous characteristics are stated in the subsequent claims.

In other words, according to the present invention, in a chain sprocket for a roller or bushing chain drive, engagement of the chain rollers with the sprocket is modulated by providing at least some teeth of the wheel having different flank profiles. The sequence of the teeth with a different profile on the circumference of the sprocket is made in accordance with a pattern preferably, but not exclusively, defined by means of a suitable per se known randomisation software.

The sprocket according to the invention achieves the above-mentioned objects and, in particular, by reducing the amplitude of the harmonics related to the meshing frequency, it reduces the noise level, but without subjecting the chain to excessive stress.

The invention will be better explained herein under with reference to the appended figures, in which:
Figure 1 shows some reference dimensions for sprockets for roller chains, having a tooth profile shaped like an arc of a circle, according to ISO standards;
Figure 2 is an illustration similar to the previous one, but it shows possible profiles of a tooth flank (on the right in the figure), according to an embodiment of the invention;
Figure 3 shows a tooth of a sprocket according to the invention, drawn in a continuous line, and the extreme shapes of the tooth flanks according to the present invention;
Figure 4 shows a portion of sprocket according to the invention, with three teeth having different flank shapes (profiles).

An embodiment of the invention relating to sprockets having a tooth profile shaped like an arc of a circle according to ISO standard R606 will be described hereinunder. However, it should be noted that according to the invention reference could be made to other standards, for example BS 228, ANSI B29 or to different profiles not foreseen by the standards and that, according to the invention, provision is also made for teeth with profiles according to different standards, or teeth according to standards and teeth not foreseen by the standards, to be made on the same sprocket.

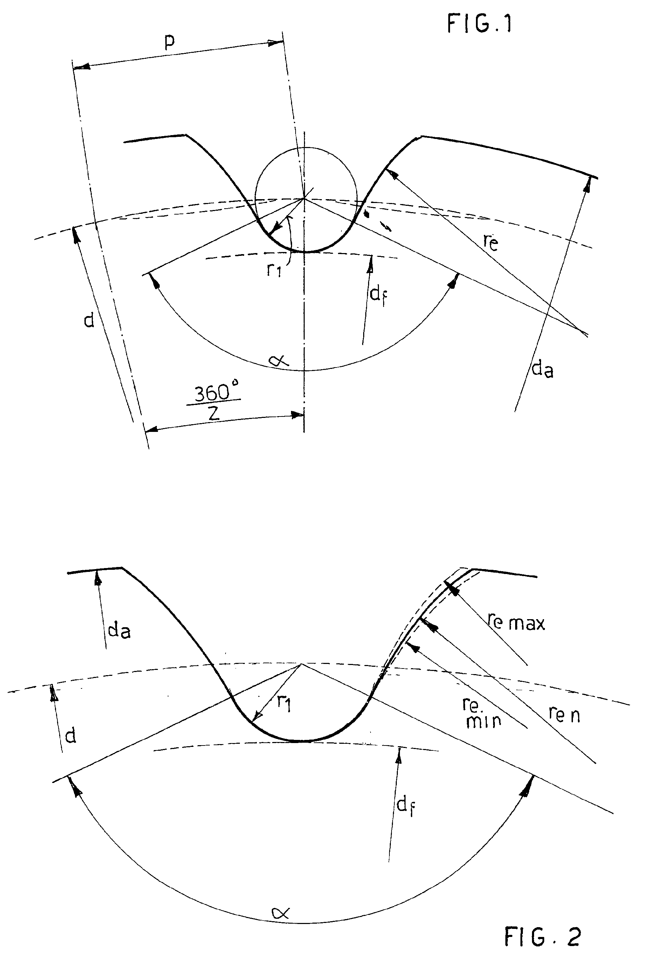

Figure 1 shows two half-teeth of a sprocket and a seating or groove therebetween for a chain roller. The sprocket is defined by the following dimensions:
- Z: number of teeth
- p: pitch, distance between the axes of two successive seatings for rollers, or distance between the axes of two adjacent chain rollers or bushings
- d: pitch-circle diameter
- d_{f}: root diameter
- dₐ: outer diameter or addendum circle diameter
- rₗ: roller or bushing seating radius
- rₑ: tooth flank radius
- α: roller or bushing seating angle

The tooth flank profile, which departs tangentially to the roller seating and ends at the addendum circle, in this case is an arc of a circle defined by a radius.

The standards define a minimum value (rₑ min) and a maximum value (rₑ max) for each of the dimensions mentioned.

According to the invention, a chain sprocket is proposed that has a sequence of teeth, at least some of which have different flank profiles, in the particular case different flank radiuses, and the distribution or pattern of the teeth with different radius is preferably but not exclusively defined according to a randomisation program. The maximum radius, minimum radius and nominal radius values defined by the standards are preferably adopted as the values of the radiuses and on the sprocket the teeth that have a radius equal to the maximum radius, the teeth that have a minimum radius and those that have a nominal radius follow each other according to a set pattern. It is possible, however, within the scope of the invention, to use different radiuses from those stated. The root diameter (d_{f}), the diameter (d) and the outside diameter or addendum circle diameter (dₐ) are substantially unchanged, whilst the angle α varies to maintain the tangency between root radius and flank radius.

For the purposes of the invention what is meant by a random or randomised sequence or distribution of the values of a dimension is a distribution or pattern thereof chosen (for example by means of suitable per se known computer programs or on the basis of experimentally acquired results), among all those that can be obtained by attributing random values to a variable.

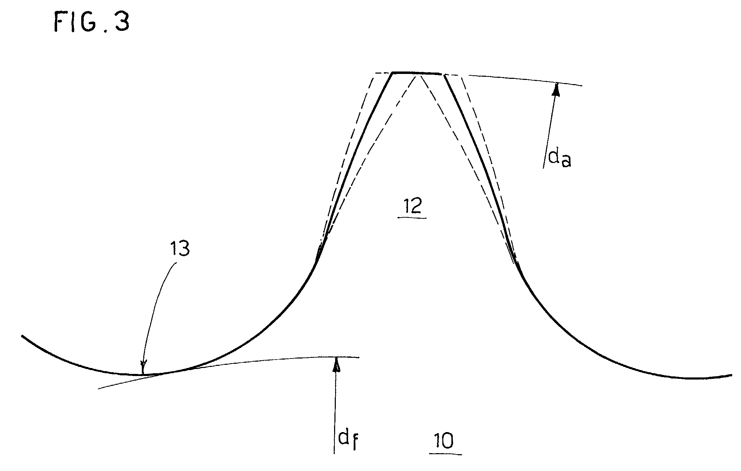

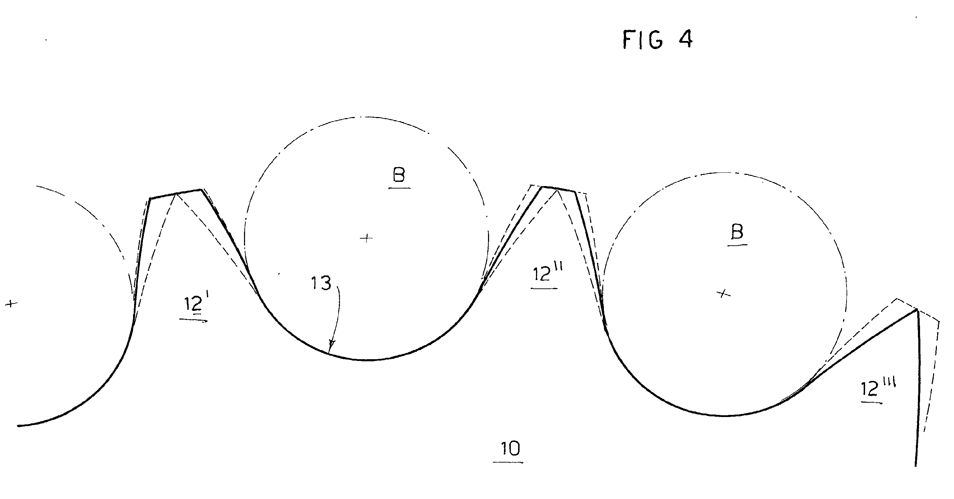

A sprocket for a roller chain drive according to the invention is shown in part in Figures 3 and 4, is referenced 10 and comprises a plurality of circumferentially distributed teeth 12, spaced by seatings or grooves 13. Only one tooth is visible in Figure 3. The actual shape of the tooth 12 is drawn with a solid or continuous line, whilst the dashed lines indicate other possible forms for the teeth, according to the maximum flank radius and the minimum flank radius set down by the standards, maintaining the other parameters substantially unchanged, in particular the root diameter d_{f}, the addendum circle diameter dₐ, the pitch circle diameter d, whilst the angle α varies to maintain the tangency between the root radius and the flank radius. The characteristic dimensions are shown with the same references used for Figure 1.

Figure 4 shows a larger portion of the profile of an embodiment of sprocket according to the invention, in which sprocket teeth having a circular-arc shaped profile are shown by way of example and precisely, in succession, a tooth 12' having a flank radius near to the maximum radius indicated by the standards, a tooth 12" with a nominal flank radius and a tooth 12"' with a flank radius near the minimum, all drawn with a solid line. In this case too, the shapes of the corresponding teeth defined by the extreme measurements of the flank radius according to the standards are drawn with dashed lines. The sequence of the teeth 12', 12", 12"', possibly of others with an intermediate flank radius will, as stated, be random. Two chain rollers or bushings are drawn with a dash-and-dot line and referenced B.

According to variants of the invention, teeth having a profile according to one type of standard (for example teeth with a profile shaped like a circular arc) and teeth having a profile according to another type of standard (for example involute teeth) and/or teeth with a profile not regulated by any type of standard can be formed in sequence along the circumference of a same chain sprocket.

The chain sprocket according to the invention engages the chain rollers according to different successive pressure angles, thus preventing the onset of resonance phenomena in the structure and therefore of irritating noise.

## Claims

1. A chain sprocket for roller or bushing chain drives, said sprocket having teeth (12) spaced by seatings (13) for chain rollers or bushings
**characterized in that**
at least some sprocket teeth have flank profiles differing from one another.

2. A chain sprocket according to claim 1, **characterized in that** said teeth with different flank profiles are disposed on the circumference of the sprocket according to a sequence according to a precise rule.

3. A chain sprocket according to claim 2 **characterized in that** said rule is chosen, for example, by means of special software or experimental tests, among the combinations obtainable by randomly combining teeth with differing flank profiles.

4. A chain sprocket according to claim 1, wherein the tooth profile is established by standards, **characterized in that** the different profiles are comprised between a maximum profile and a minimum profile defined by the standards.

5. A chain sprocket according to claim 4, in which the profile is shaped like an arc of a circle **characterized in that** the radius of the arc of circle is comprised between a minimum radius and a maximum radius set down by the standards.

6. A chain sprocket according to claim 1, **characterized in that** it comprises teeth having flank profiles not defined by standards.

7. A chain sprocket according to claim 1 **characterized in that** it comprises teeth having flank profiles defined by different standards.

8. A chain sprocket according to claim 1 **characterized in that** it comprises teeth having flank profiles defined by standards and flank profiles not defined by standards.

9. A sprocket according to claim 1, wherein the root diameter, the addendum circle diameter, and the radius of the roller or bushing seating are constant and do not vary from one tooth to another.
